# EUROPÄISCHE PATENTSCHRIFT

(11) **EP 1 138 027 B1**
(45) Veröffentlichungstag und Bekanntmachung des Hinweises auf die Patenterteilung: **05.03.2003**
(21) Anmeldenummer: 99957686.1
(22) Anmeldetag: 09.12.1999
(51) Int. Cl.: G07D 9/00, G07D 5/02, G09B 21/00

(54) **VORRICHTUNG ZUM ERKENNEN VON MÜNZEN**
DEVICE FOR IDENTIFYING A COIN
DISPOSITIF PERMETTANT DE RECONNAITRE LES PIECES DE MONNAIE

(30) Priorität: 10.12.1998 AT 82298 U
(43) Veröffentlichungstag der Anmeldung: 04.10.2001
(73) Patentinhaber: CARETEC GmbH, 1010 Wien (AT)
(72) Erfinder: LITSCHEL, Dietmar, A-3400 Klosterneuburg (AT)
(74) Vertreter: Babeluk, Michael, Dipl.-Ing. Mag.
(86) Internationale Anmeldenummer: AT9900302
(87) Internationale Veröffentlichungsnummer: WO00034924

(56) Entgegenhaltungen:
- WO-A-91/09380
- FR-A- 2 541 799
- US-A- 1 910 978
- US-A- 2 755 928

## Beschreibung

Die vorliegende Erfindung betrifft eine Vorrichtung zum Erkennen von Münzen aufgrund ihres Durchmessers. Der Umgang mit Geld ist insbesondere für blinde und sehbehinderte Personen schwierig. Münzen verschiedenen Wertes einer Währung unterscheiden sich zwar im allgemeinen in ihrer Größe und Dicke und bisweilen auch in ihrer Form, die Unterschiede sind jedoch im allgemeinen so gering, dass es schwierig ist, den Wert von Münzen rein taktil zu erkennen.

US-A-1 910 978 weist eine vorrichtung auf, die die Merkmale des Oberbegriffes des Anspruchs 1 enthält. Diese Vorrichtung erkennt Münzen selbsttätig innerhalb eines Verkaufs- bzw. Fernsprech-Automaten.

Aufgabe der vorliegenden Erfindung ist es, blinden, sehbehinderten oder allgemein behinderten Personen das Erkennen von Münzen zu erleichtern. Dabei soll die entsprechende Vorrichtung klein, leicht herstellbar und einfach zu bedienen sein.

Erfindungsgemäß ist die Vorrichtung gekennzeichnet durch einen plattenförmigen Grundkörper, der einen vertieften Abschnitt aufweist, der von zwei Flanken begrenzt ist, die in einem spitzen Winkel zueinander geneigt sind, wobei im Bereich des vertieften Abschnitts Markierungen vorgesehen sind, um den Wert einer in den vertieften Abschnitt eingeschobenen Münze anzuzeigen. Die Münzen werden dabei in die Vertiefung eingelegt und in der Richtung der zusammenlaufenden Flanken solange wie möglich verschoben. Der Ort des Endpunktes der Bewegung, an dem keine weitere Verschiebung mehr möglich ist, ist vom Durchmesser der jeweiligen Münze abhängig. Daraus kann auf ihren Wert rückgeschlossen werden. Voraussetzung für die Erkennbarkeit der Münzen eines Währungssystems ist, dass sich die Münzen unterschiedlichen Wertes jeweils in ihrem, Durchmesser, unterscheiden. Die Markierungen im Bereich des vertieften Abschnitts können dabei in diesem oder neben diesem angeordnet sein.

Die Herstellung der erfindungsgemäßen Vorrichtung ist besonders einfach dadurch, dass die Flanken im wesentlichen geradlinig ausgebildet sind.

Das Einschieben der Münzen in den vertieften Abschnitt wird erleichtert, wenn der vertiefte Abschnitt zu einem Rand des plattenförmigen Grundkörpers hin offen ausgebildet ist, wobei es insbesondere günstig ist, wenn die Flanken im Bereich des Randes nach außen gerundet sind.

Die Erkennbarkeit wird insbesondere dadurch erleichtert, dass innerhalb des vertieften Abschnitts eine weitere Vertiefung ausgebildet ist, die taktil erfassbare Markierungen zum Erkennen des Wertes einer eingelegten Münze aufweist. Dabei zeigt die Markierung, die jeweils im Bereich der Vorderkante der Münze angeordnet ist, ein Symbol für ihren Wert an. Zusätzlich oder alternativ können auch noch Markierungen am Rand vorgesehen sein.

Eine besonders praktikable Ausführungsvariante der Erfindung ergibt sich dann, wenn der plattenförmige Grundkörper als Vorrichtung zum Erkennen von Geldscheinen aufgrund ihrer Abmessungen ausgebildet ist. So sind aus der EP 0 506 713 A des Anmelders Vorrichtungen zur Erkennung des Wertes von Geldscheinen bekannt. Durch die Kombination dieser Geldscheinerkennung mit der Münzerkennung lässt sich ein vollständiges Gelderkennungsgerät erhalten.

In einer besonders begünstigten Ausführungsvariante der vorliegenden Erfindung ist weiters vorgesehen, dass die Höhe der Flanken so bemessen ist, dass eine zusätzliche Unterscheidung der Münzen aufgrund ihrer Dicke ermöglicht wird. Dabei kann insbesondere vorgesehen sein, dass die Höhe der Flanke der Dicke einer bestimmten Münze entspricht. Es ist möglich, dass sich einzelne Münzen unterschiedlicher Werte in ihrem Durchmesser nur geringfügig unterscheiden. In einem solchen Fall kann die Dicke der Münzen ein weiteres Unterscheidungskriterium darstellen. Dabei wird die Höhe der Flanken, das heißt, die Tiefe des vertieften Abschnittes, so bemessen, dass sie einer der zu unterscheidenden Münzen genau entspricht, wodurch sichergestellt ist, dass die Oberseite der Münzen bündig mit der Oberfläche des plattenförmigen Grundkörpers ist. Dies kann taktil leicht erfasst werden. Andere Münzen, die dicker oder dünner sind, können auf diese Weise leicht unterschieden werden.

In der Folge werden bevorzugte Ausführungsvarianten der Erfindung in den Figuren näher erläutert. Es zeigen:
- Fig. 1: eine Draufsicht auf eine erfindungsgemäße Ausführungsvariante;
- Fig. 2: einen Schnitt nach Linie II-II in Fig. 1;
- Fig. 3: eine Draufsicht auf eine weitere Ausführungsvariante der Erfindung und
- Fig. 4: einen Schnitt nach Linie IV -IV in Fig. 3.

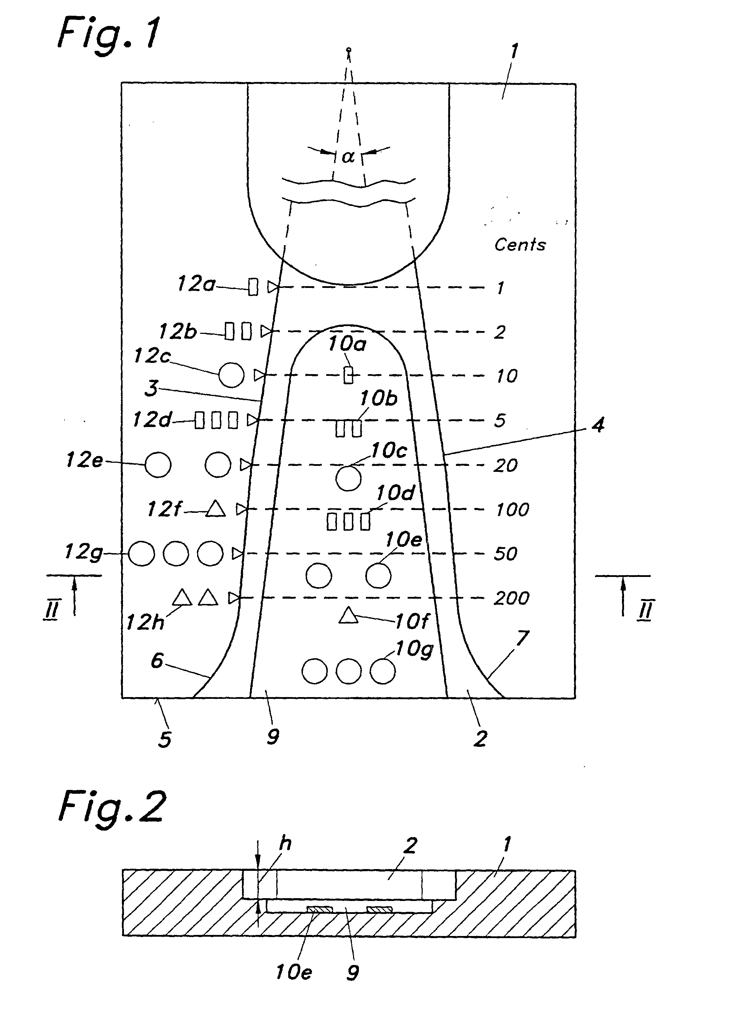

Die in den Figuren dargestellte Vorrichtung besteht aus einem plattenförmigen Grundkörper 1, der Teil einer nicht näher dargestellten Geldscheinerkennungsvorrichtung ist. In dem plattenförmigen Grundkörper ist ein vertiefter Abschnitt 2 ausgebildet, der von zwei Flanken 3, 4 begrenzt ist, die in einem spitzen Winkel α aufeinander zulaufen. Der Winkel α ist so ausgewählt, dass die Unterscheidung der Münzen bei vorgegebenen Abmessungen so leicht als möglich ist. Für den Fachmann ist offensichtlich, dass ein sehr kleiner Winkel α relativ große Abmessungen der Vorrichtung erforderlich macht. Ein größerer Winkel α führt jedoch zu einer erschwerten Erkennbarkeit der Münzen. In der Praxis hat es sich als günstig herausgestellt, einen Öffnungswinkel α zwischen 5 und 15 Grad, vorzugsweise zwischen 8 und 12 Grad zu verwenden. Im Bereich eines Randes 5 des plattenförmigen Grundkörpers 1 weisen die Flanken 3, 4 Rundungen 6, 7 auf, um das Einschieben von Münzen zu erleichtern. Innerhalb des vertieften Abschnitts 2 ist eine weitere Vertiefung 9 ausgebildet, in dem schematisch angedeutete Markierungen 10a, 10b, 10c, 10d, 10e, 10f und 10g angeordnet sind. Diese Markierungen können beispielsweise in Brailleschrift ausgeführt sein. In Anbetracht des beschränkten Raumes werden jedoch im allgemeinen einfache Symbole wie Kreise, Dreiecke oder Rechtecke, verwendet werden. Die Bedeutung der Symbole kann beispielsweise auf der Rückseite der Vorrichtung in Form einer Liste wiedergegeben werden. Mit unterbrochenen Linien ist in der Fig. 1 jeweils der Durchmesser der unterschiedlichen Münzen angegeben, wenn diese bis zum Rand eingeschoben werden. Neben den jeweiligen strichlierten Linien ist der zugehörige Wert der Münze in Vielfachen von Cent angegeben, so dass diese Vorrichtung zur Erkennung von Euro- bzw. Centmünzen ausgebildet ist. Weiters sind unmittelbar an der Flanke 3 erhabene Pfeile 11 angeordnet, die die Stellen bezeichnen, an denen vollständig eingeschobene Münzen an der Flanke 3 anliegen. Neben den Pfeilen 11 sind Markierungen 12a bis 12g angeordnet, die den Markierungen 10a bis 10g entsprechen. Zusätzlich bezeichnet eine Markierung 12h die 2-Euromünze. Die Markierungen 10a bis 10g und 12a bis 12h können gleich oder alternativ vorgesehen sein. Wird beispielsweise eine 1-Centmünze in den vertieften Abschnitt 2 eingeschoben, so liegt die Markierung 10a unmittelbar hinter dem Rand der Münze und kann dort abgetastet werden. In analoger Weise liegt die Markierung 10b hinter einer in den vertieften Abschnitt 2 eingeschobenen 2-Centmünze, usw. Für die 2-Euromünze (= 200 Cent) ist keine Markierung im vertieften Abschnitt 2 vorgesehen, da diese Münze bündig mit dem Rand 5 abschließt.

Aus der Fig. 2 ist ersichtlich, dass die Markierungen 10a bis 10g innerhalb der weiteren Vertiefung 9 vorstehen, so dass sie taktil erfassbar sind, jedoch nicht über die Grundfläche des vertieften Abschnitts 2 vorstehen, um so das Einschieben der Münzen nicht zu behindern.

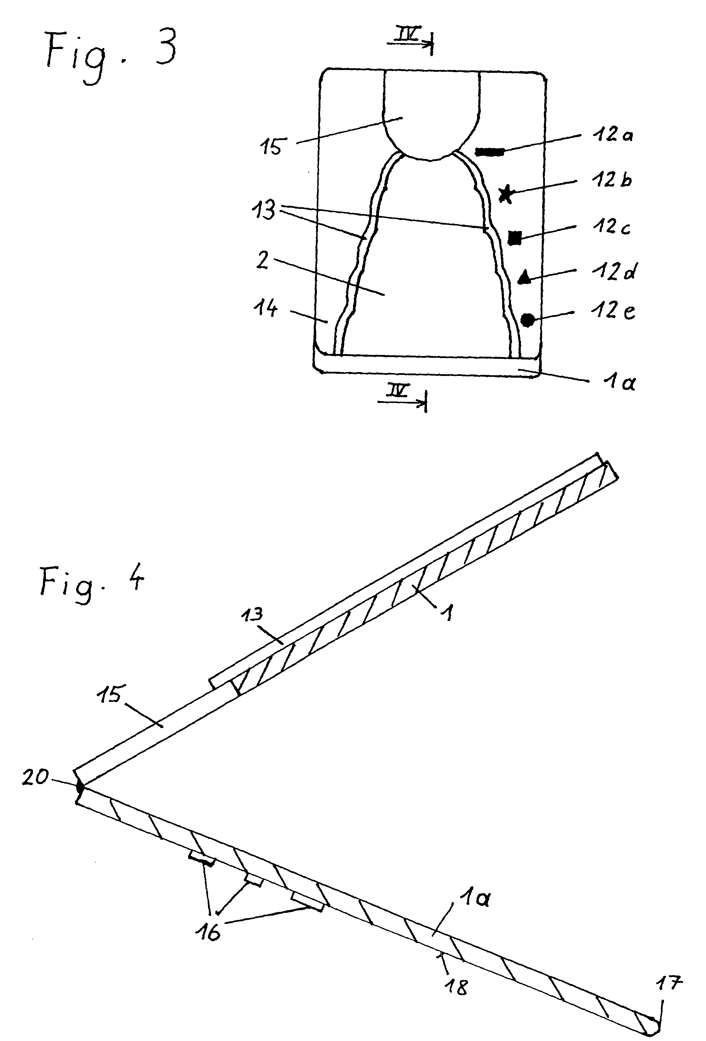

Die Ausführungsvariante von Fig. 3 besteht aus einem plattenförmigen Grundkörper 1, an dem gelenkig eine weitere Platte 1a angebracht ist. Der plattenförmige Grundkörper 1 besitzt auf seiner Oberfläche Vorsprünge 13, zwischen denen ein vertiefter Abschnitt 2 ausgebildet ist, der das Einschieben von Münzen ermöglicht, wie es oben beschrieben worden ist. Der Abschnitt 14 außerhalb der Vorsprünge 13 kann in einer Ebene mit dem vertieften Abschnitt 2 ausgebildet sein. Die Markierungen 12a, 12b, 12c, 12d und 12e sind wie oben beschrieben erhöht ausgebildet.

Die in den Fig. 3 und Fig. 4 dargestellte Ausführungsvariante ermöglicht auch das Erkennen des Werts von Geldscheinen anhand ihrer Größe. Zu diesem Zweck wird ein Geldschein mit seiner Schmalseite zwischen dem plattenförmigen Grundkörper 1 und die weitere Platte 1a eingeführt, bis eine Kante des Geldscheins im Gelenk 20 anliegt. Der nicht dargestellte Geldschein wird durch das Zusammenklappen des plattenförmigen Grundkörpers 1 und der weiteren Platte 1a eingeklemmt und kann durch eine Öffnung 15 im plattenförmigen Grundkörper 1 zusätzlich festgehalten werden. Der Geldschein wird um die Kante 17 der weiteren Platte 1a umgeschlagen und an der Außenfläche 18 angelegt. Markierungen 16 ermöglichen die Bestimmung des Werts des Geldscheins anhand seiner Länge. Falls die Bestimmung aufgrund des Werts aufgrund der Länge allein schwierig oder unmöglich ist, kann zusätzlich auch die Breite des Geldscheins gemessen werden.

Die vorliegende Erfindung ermöglicht es blinden oder allgemein behinderten Personen, den Wert von Münzen einfach und ohne fremde Hilfe zu bestimmen.

## Patentansprüche

1. Vorrichtung zum Erkennen von Münzen aufgrund ihres Durchmessers mit einem plattenförmigen Grundkörper (1), der einen vertieften Abschnitt (2) aufweist, der von zwei Flanken (3, 4) begrenzt ist, die in einem spitzen Winkel α zueinander geneigt sind **dadurch gekennzeichnet, dass** im Bereich des vertieften Abschnitts (2) taktil erfassbare Markierungen (10a, 10b, 10c, 10d, 10e, 10f, 10g; 12a, 12b, 12c, 12d, 12e, 12f, 12g, 12h) vorgesehen sind, um den Wert einer in den vertieften Abschnitt (2) eingeschobenen Münze anzuzeigen.

2. Vorrichtung nach Anspruch 1, **dadurch gekennzeichnet, dass** die Flanken (3, 4) im wesentlichen geradlinig ausgebildet sind.

3. Vorrichtung nach einem der Ansprüche 1 oder 2, **dadurch gekennzeichnet, dass** der vertiefte Abschnitt (2) zu einem Rand (5) des plattenförmigen Grundkörpers (1) hin offen ausgebildet ist.

4. Vorrichtung nach Anspruch 3, **dadurch gekennzeichnet, dass** die Flanken (3, 4) im Bereich des Randes (5) nach außen gerundet sind.

5. Vorrichtung nach einem Ansprüche 1 bis 4, **dadurch gekennzeichnet, dass** innerhalb des vertieften Abschnitts (2) eine weitere Vertiefung (9) ausgebildet ist, die taktil erfassbare Markierungen (10a, 10b, 10c, 10d, 10e, 10f, 10g) zum Erkennen des Wertes einer eingelegten Münze aufweist.

6. Vorrichtung nach Anspruch 5, **dadurch gekennzeichnet, dass** im Bereich der Flanken (3, 4) neben dem vertieften Abschnitt (2) weitere taktil erfassbare Markierungen (12a, 12b, 12c, 12d, 12e, 12f, 12g, 12h) vorgesehen sind.

7. Vorrichtung nach einem der Ansprüche 1 bis 6, **dadurch gekennzeichnet, dass** der plattenförmige Grundkörper (1) als Vorrichtung zum Erkennen von Geldscheinen aufgrund ihrer Abmessungen ausgebildet ist.

8. Vorrichtung nach einem der Ansprüche 1 bis 7, **dadurch gekennzeichnet, dass** die Höhe (h) der Flanken (3, 4) so bemessen ist, dass eine zusätzliche Unterscheidung der Münzen aufgrund ihrer Dicke ermöglicht wird.

9. Vorrichtung nach Anspruch 8, **dadurch gekennzeichnet, dass** die Höhe (h) der Flanke (3, 4) der Dicke einer bestimmten Münze entspricht.

10. Vorrichtung nach einem der Ansprüche 1 bis 9, **dadurch gekennzeichnet, dass** an dem plattenförmigen Grundkörper (1) eine weitere Platte (1a) gelenkig angebracht ist und dass die Vertiefung (2) auf der der weiteren Platte (1a) gegenüberliegenden Seite angeordnet ist.

## Claims

1. An apparatus for recognizing coins through their diameters, with a plate-like basic body (1) comprising a recessed section (2) which is delimited by two flanks (3, 4) which are inclined with respect to each other at an acute angle α, **characterized in that** markings (10a, 10b, 10c, 10d, 10e, 10f, 10g; 12a, 12b, 12c, 12d, 12e, 12f, 12g, 12h) that are detectable in a tactile fashion are provided in the zone of the recessed section (2) in order to indicate the value of a coin inserted into the recessed section (2).

2. An apparatus as claimed in claim 1, **characterized in that** the flanks (3, 4) are arranged in a substantially straight way.

3. An apparatus as claimed in one of the claims 1 or 2, **characterized in that** the recessed section (2) is provided with an open arrangement towards an edge (5) of the plate-like basic body (1).

4. An apparatus as claimed in claim 3, **characterized in that** the flanks (3, 4) are outwardly rounded off in the zone of the edge (5).

5. An apparatus as claimed in one of the claims 1 to 4, **characterized in that** a further recess (9) is arranged within the recessed section (2), which further recess comprises markings (10a, 10b, 10c, 10d, 10e, 10f, 10g) that are detectable in a tactile fashion for recognizing the value of an inserted coin.

6. An apparatus as claimed in claim 5, **characterized in that** further markings (12a, 12b, 12c, 12d, 12e, 12f, 12g, 12h) that are detectable in a tactile fashion are provided in the zone of the flanks (3, 4) adjacent to the recessed section (2).

7. An apparatus as claimed in one of the claims 1 to 6, **characterized in that** the plate-like basic body (1) is arranged as an apparatus for recognizing banknotes through their dimensions.

8. An apparatus as claimed in one of the claims 1 to 7, **characterized in that** the height (h) of the flanks (3, 4) is dimensioned in such a way that an additional differentiation of the coins through their thickness is enabled.

9. An apparatus as claimed in claim 8, **characterized in that** the height (h) of the flank (3, 4) corresponds to the thickness of a certain coin.

10. An apparatus as claimed in one of the claims 1 to 9, **characterized in that** a further plate (1a) is flexibly attached to the plate-like basic body (1) and that the recess (2) is arranged on the side opposite of the further plate (1a).

## Revendications

1. Dispositif pour reconnaître les pièces de monnaie d'après leur diamètre, avec un corps de base (1) en forme de plaque comportant une section en creux (2) qui est délimitée par deux flancs (3, 4) qui sont disposés l'un par rapport à l'autre pour former un angle aigu α, **caractérisé en ce que**, dans la région de la section en creux (2), des marquages reconnaissables au toucher (10a, 10b, 10c, 10d, 10e, 10f, 10g ; 12a, 12b, 12c, 12d, 12e, 12f, 12g, 12h) sont prévus pour indiquer la valeur de la pièce de monnaie glissée dans la section en creux (2).

2. Dispositif selon la revendication 1, **caractérisé en ce que** les flancs (3, 4) sont réalisés de manière à être sensiblement rectilignes.

3. Dispositif selon l'une des revendications 1 ou 2, **caractérisé en ce que** la section en creux (2) est réalisée de manière à être ouverte sur l'extérieur au niveau d'un bord (5) du corps de base (1) en forme de plaque.

4. Dispositif selon la revendication 3, **caractérisé en ce que** les flancs (3, 4) sont arrondis vers l'extérieur dans la région du bord (5).

5. Dispositif selon l'une des revendications 1 à 4, **caractérisé en ce qu**'à l'intérieur de la section en creux (2), il est prévu une creusure additionnelle (9) qui porte des marquages reconnaissables au toucher (10a, 10b, 10c, bd, 10e, 10f, 10g) permettant de connaître la valeur de la pièce de monnaie introduite.

6. Dispositif selon la revendication 5, **caractérisé en ce que** dans la région des flancs (3, 4) et à côté de la section en creux (2), il est prévu des marquages additionnels reconnaissables au toucher (12a, 12b, 12c, 12d, 12e,12f, 12g, 12h).

7. Dispositif selon l'une des revendications 1 à 6, **caractérisé en ce que** le corps de base (1) en forme de plaque est réalisé pour permettre de reconnaître les billets de banque d'après leurs dimensions.

8. Dispositif selon l'une des revendications 1 à 7, **caractérisé en ce que** la hauteur (h) des flancs (3, 4) est sélectionnée de manière à permettre une différentiation additionnelle des pièces de monnaie d'après leur épaisseur.

9. Dispositif selon la revendication 8, **caractérisé en ce que** la hauteur (h) des flancs (3, 4) correspond à l'épaisseur d'une pièce de monnaie déterminée.

10. Dispositif selon l'une des revendications 1 à 9, **caractérisé en ce que**, sur le corps de base (1) en forme de plaque, une plaque additionnelle (1a) est montée par l'intermédiaire d'une articulation et **en ce que** la section en creux (2) est aménagée sur le côté qui est éloigné de la plaque additionnelle (1a).
